(19) Europäisches Patentamt
European Patent Office
Office européen des brevets

(11) EP 1 521 525 B1

(12) EUROPÄISCHE PATENTSCHRIFT

(45) Veröffentlichungstag und Bekanntmachung des Hinweises auf die Patenterteilung:
**04.01.2006 Patentblatt 2006/01**

(21) Anmeldenummer: **03762544.9**

(22) Anmeldetag: **30.06.2003**

(51) Int Cl.:
*A01N 43/32* (2006.01)

(86) Internationale Anmeldenummer:
**PCT/EP2003/006886**

(87) Internationale Veröffentlichungsnummer:
**WO 2004/004460 (15.01.2004 Gazette 2004/03)**

(54) **FUNGIZIDE MISCHUNGEN AUF BASIS VON DITHIANON**

DITHIANON-BASED FUNGICIDAL MIXTURES

MELANGES FONGICIDES A BASE DE DITHIANON

(84) Benannte Vertragsstaaten:
**AT BE BG CH CY CZ DE DK EE ES FI FR GB GR HU IE IT LI LU MC NL PT RO SE SI SK TR**
Benannte Erstreckungsstaaten:
**AL LT LV MK**

(30) Priorität: **08.07.2002 DE 10230803**

(43) Veröffentlichungstag der Anmeldung:
**13.04.2005 Patentblatt 2005/15**

(73) Patentinhaber: **BASF Aktiengesellschaft**
**67056 Ludwigshafen (DE)**

(72) Erfinder:
- **AMMERMANN, Eberhard**
  **64646 Heppenheim (DE)**
- **STIERL, Reinhard**
  **67251 Freinsheim (DE)**
- **SCHÖFL, Ulrich**
  **68782 Brühl (DE)**
- **SCHELBERGER, Klaus**
  **67161 Gönnheim (DE)**
- **SCHERER, Maria**
  **76829 Godramstein (DE)**
- **HENNINGSEN, Michael**
  **67227 Frankenthal (DE)**
- **GOLD, Randall, Even**
  **67283 Obrigheim (DE)**

(56) Entgegenhaltungen:
**WO-A-01/42223**
**DE-B- 1 060 655**
**US-A- 2 976 296**
**US-A- 5 330 995**
**US-B1- 6 369 093**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 1 521 525 B1

Printed by Jouve, 75001 PARIS (FR)

## Beschreibung

Die vorliegende Erfindung betrifft fungizide Mischungen, enthaltend

A) die Verbindung der Formel I

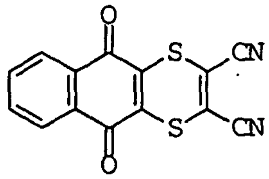

I

und

B) ein Biphenylamid der Formel II,

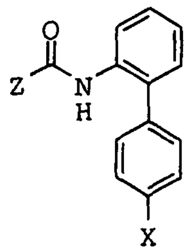

II

in der Z für einen Pyridyl- oder fünfgliederigen Heteroarylring steht, der neben Kohlenstoffatomen ein oder zwei Stickstoffatome oder ein Stickstoffatom und ein Sauerstoff- oder Schwefelatom enthält,
wobei Z einen bis drei gleiche oder verschiedene Substituenten aus der Gruppe Halogen, Methyl oder Trifluormethyl trägt, und X für Halogen steht, in einer synergistisch wirksamen Menge.

Außerdem betrifft die Erfindung Verfahren zur Bekämpfung von Schadpilzen mit Mischungen der Verbindungen I und II und die Verwendung der Verbindungen I und II zur Herstellung derartiger Mischungen.

Im Hinblick auf eine gewünschte Senkung der Aufwandmengen und einer Verbreiterung des Wirkungsspektrums der bekannten Verbindungen lagen der vorliegenden Erfindungen Mischungen als Aufgabe zugrunde, die bei verringerter Gesamtmenge an ausgebrachten Wirkstoffen eine verbesserte Wirkung gegen Schadpilze zeigen (synergistische Mischungen).

Demgemäß wurden die eingangs definierten Mischungen gefunden. Es wurde außerdem gefunden, daß sich bei gleichzeitiger gemeinsamer oder getrennter Anwendung der Verbindungen I und II oder bei Anwendung der Verbindungen I und II nacheinander Schadpilze besser bekämpfen lassen als mit den Einzelverbindungen.

Üblicherweise kommen Mischungen der Verbindung I mit einem Biphenylamid II zur Anwendung. Unter Umständen können jedoch Mischungen der Verbindung I mit zwei oder mehreren Biphenylamiden II vorteilhaft sein.

Die Verbindung der Formel I (common name: dithianon) sowie Verfahren zu ihrer Herstellung sind in DE-AS 1 060 655 und GB-A 857 383 beschrieben.

Die Biphenylamide der Formel II, ihre Herstellung und ihre Wirkung gegen Schadpilze sind ebenfalls aus der Literatur bekannt [vgl. EP-A 545 099].

Bei den in Formel II angegebenen Definitionen bedeutet Halogen Fluor, Chlor, Brom und Jod, insbesondere Fluor und Chlor.

In einer bevorzugten Ausführungsform der erfindungsgemäßen Mischungen betrifft Formel II insbesondere Verbindungen, in denen Z einen substituierten, insbesondere in 2-Stellung substituierten 3-Pyridylring darstellt. Diese Verbindungen entsprechen Formel IIA, in der X für Halogen und Y für Trifluormethyl oder Halogen steht:

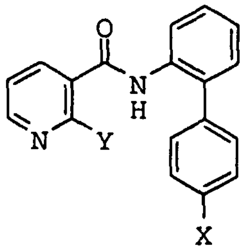

IIA

Verbindungen der Formel IIA sind bevorzugt, in denen X und Y gleich oder verschieden sind und Halogen, insbesondere Fluor oder Chlor, bedeuten.

Insbesondere kommen folgende Verbindungen der Formel IIA für die erfindungsgemäßen Mischungen in Betracht:

| Verbindung Nr. | Y | X |
|---|---|---|
| II-1 | Cl | Cl |
| II-2 | Cl | F |
| II-3 | F | Cl |
| II-4 | F | F |
| II-5 | $CF_3$ | Cl |
| II-6 | $CF_3$ | F |

Besonders bevorzugt sind Mischungen von Dithianon I mit der Verbindung II-1 (vorgeschlagener common name: Boscalid).

In einer anderen Ausführungsform der erfindungsgemäßen Mischungen steht Formel II für Biphenylamide, in denen Z für einen fünfgliederigen Heteroarylring steht, der neben Kohlenstoffatomen ein oder zwei Stickstoffatome oder ein Stickstoffatom und ein Sauerstoff- oder Schwefelatom enthält und der einen, zwei oder drei Substituenten aus der Gruppe Halogen, Methyl und Trifluormethyl trägt. Diese Verbindungen entsprechen Formel IIB, in der die Variablen die folgende Bedeutung haben:

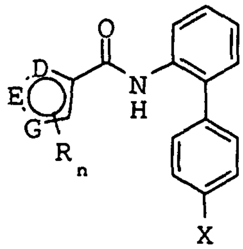

IIB

- D Kohlenstoff oder Schwefel;
- E Kohlenstoff oder Stickstoff;
- G Sauerstoff, Kohlenstoff oder Stickstoff bedeutet; mit der Maßgabe, daß mindestens eine der Variablen D, E, G ungleich Kohlenstoff ist;
- R Halogen, Methyl und Halogenmethyl, insbesondere Trifluormethyl;
- n 1, 2 oder 3, wobei die Gruppen R verschieden sein können, wenn n größer als 1 ist.

Verbindungen der Formel IIB, ihre Herstellung und ihre fungizide Aktivität sind aus der Literatur bekannt (vgl.: WO-A 01/42223; DE-A 198 40 322; JP-A 07/145 156; JP-A 2001/302 605).

Bevorzugt sind Verbindungen der Formel IIB, in denen die Gruppe

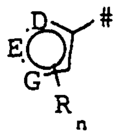

wobei # die Bindung zu der Carbonylgruppe bedeutet, für eine der folgenden Gruppen A oder B steht,

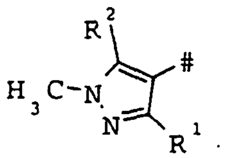 A 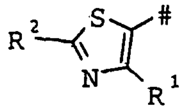 B

in der $R^1$ und $R^2$ folgende Bedeutung haben:

$R^1$ Wasserstoff, Methyl oder Trifluormethyl; und
$R^2$ Wasserstoff, Methyl oder Halogen.

Neben den Verbindungen der Formel IIA kommen insbesondere folgende Verbindungen II für die erfindungsgemäßen Mischungen in Betracht:

| Verbindung Nr. | Z | $R^1$ | $R^2$ | X |
|---|---|---|---|---|
| II-7 | A | $CF_3$ | H | Cl |
| II-8 | A | $CF_3$ | H | F |
| II-9 | A | $CH_3$ | F | Cl |
| II-10 | A | $CH_3$ | F | F |
| II-11 | B | $CF_3$ | H | Cl |
| II-12 | B | $CF_3$ | H | F |
| II-13 | B | $CF_3$ | $CH_3$ | Cl |
| II-14 | B | $CF_3$ | $CH_3$ | F |

Die Verbindungen II sind wegen ihres basischen Charakters in der Lage, mit anorganischen oder organischen Säuren oder mit Metallionen Salze oder Addukte zu bilden.

Beispiele für anorganische Säuren sind Halogenwasserstoffsäuren wie Fluorwasserstoff, Chlorwasserstoff, Bromwasserstoff und Jodwasserstoff, Schwefelsäure, Phosphorsäure, Kohlensäure und Salpetersäure.

Als organische Säuren kommen beispielsweise Ameisensäure, und Alkansäuren wie Essigsäure, Trifluoressigsäure, Trichloressigsäure und Propionsäure sowie Glycolsäure, Thiocyansäure, Milchsäure, Bernsteinsäure, Zitronensäure, Benzoesäure, Zimtsäure, Oxalsäure, Alkylsulfonsäuren (Sulfonsäuren mit geradkettigen oder verzweigten Alkylresten mit 1 bis 20 Kohlenstoffatomen), Arylsulfonsäuren oder -disulfonsäuren (aromatische Reste wie Phenyl und Naphthyl welche eine oder zwei Sulfonsäuregruppen tragen), Alkylphosphonsäuren (Phosphonsäuren mit geradkettigen oder verzweigten Alkylresten mit 1 bis 20 Kohlenstoffatomen), Arylphosphonsäuren oder -diphosphonsäuren (aromatische Reste wie Phenyl und Naphthyl welche eine oder zwei Phosphorsäurereste tragen), wobei die Alkyl- bzw. Arylreste weitere Substituenten tragen können, z.B. p-Toluolsulfonsäure, Salizylsäure, p-Aminosalizylsäure, 2-Phenoxybenzoesäure, 2-Acetoxybenzoesäure etc., in Betracht.

Als Metallionen kommen insbesondere die Ionen der Elemente der zweiten Hauptgruppe, insbesondere Calzium und Magnesium, der dritten und vierten Hauptgruppe, insbesondere Aluminium, Zinn und Blei, sowie der ersten bis achten Nebengruppe, insbesondere Chrom, Mangan, Eisen, Kobalt, Nickel, Kupfer, Zink und andere in Betracht. Besonders bevorzugt sind die Metallionen der Elemente der Nebengruppen der vierten Periode. Die Metalle können dabei in den verschiedenen ihnen zukommenden Wertigkeiten vorliegen.

Bevorzugt setzt man bei der Bereitstellung der Mischungen die reinen Wirkstoffe I und II ein, denen man je nach Bedarf weitere Wirkstoffe gegen Schadpilze oder andere Schädlinge wie Insekten, Spinntiere oder Nematoden,

oder auch herbizide oder wachstumsregulierende Wirkstoffe oder Düngemittel beimischen kann.

Die Mischungen der Verbindungen I und II bzw. die gleichzeitige gemeinsame oder getrennte Verwendung der Verbindungen I und II zeichnen sich durch eine hervorragende Wirkung gegen ein breites Spektrum von pflanzenpathogenen Pilzen, insbesondere aus der Klasse der *Ascomyceten, Deuteromyceten, Oomyceten* und *Basidiomyceten,* aus. Sie sind z.T. systemisch wirksam und können daher auch als Blatt- und Bodenfungizide eingesetzt werden.

Besondere Bedeutung haben sie für die Bekämpfung einer Vielzahl von Pilzen an verschiedenen Kulturpflanzen wie Baumwolle, Gemüsepflanzen (z.B. Gurken, Bohnen und Kürbisgewächse), Gerste, Gras, Hafer, Kaffee, Mais, Obstpflanzen, Reis, Roggen, Soja, Wein, Weizen, Zierpflanzen, Zuckerrohr und einer Vielzahl von Samen.

Insbesondere eignen sie sich zur Bekämpfung der folgenden pflanzenpathogenen Pilze: *Erysiphe cichoracearum* und *Sphaerotheca fuliginea* an Kürbisgewächsen, *Podosphaera leucotricha* an Äpfeln, *Uncinula necator* an Reben, *Puccinia*-Arten an Getreide, *Rhizocto*-nia-Arten an Baumwolle, Reis und Rasen, Ustilago-Arten an Getreide und Zuckerrohr, *Venturia inaequalis* (Schorf) an Äpfeln, *Helminthosporium*-Arten an Getreide, *Septoria nodorum* an Weizen, *Botrytis cinerea* (Grauschimmel) an Erdbeeren, Gemüse, Zierpflanzen und Reben, *Cercospora arachidicola* an Erdnüssen, *Pseudocercosporella herpotrichoides* an Weizen und Gerste, *Pyricularia oryzae* an Reis, *Phytophthora infestans* an Kartoffeln und Tomaten, *Pseudoperonospora-Arten* an Kürbisgewächsen und Hopfen, *Plasmopara viticola* an Reben, *Alternaria*-Arten an Gemüse und Obst sowie *Fusarium*- und *Verticillium*-Arten.

Sie sind außerdem im Materialschutz (z.B. Holzschutz) anwendbar, beispielsweise gegen *Paecilomyces variotii*.

Die Verbindungen I und II können gleichzeitig gemeinsam oder getrennt oder nacheinander aufgebracht werden, wobei die Reihenfolge bei getrennter Applikation im allgemeinen keine Auswirkung auf den Bekämpfungserfolg hat.

Die Verbindungen I und II werden üblicherweise in einem Gewichtsverhältnis von 100:1 bis 1:50, vorzugsweise 50:1 bis 1:50, insbesondere 10:1 bis 1:10 angewandt.

Die Aufwandmengen für die Verbindung I liegen entsprechend in der Regel bei 5 bis 2000 g/ha, vorzugsweise 10 bis 1000 g/ha, insbesondere 50 bis 750 g/ha.

Die Aufwandmengen der erfindungsgemäßen Mischungen liegen je nach Art des gewünschten Effekts für die Verbindungen II bei 5 g/ha bis 500 g/ha, vorzugsweise 50 bis 500 g/ha, insbesondere 50 bis 200 g/ha.

Bei der Saatgutbehandlung werden im allgemeinen Aufwandmengen an Mischung von 0,001 bis 1 g/kg Saatgut, vorzugsweise 0,01 bis 0,5 g/kg, insbesondere 0,01 bis 0,1 g/kg verwendet.

Sofern für Pflanzen pathogene Schadpilze zu bekämpfen sind, erfolgt die getrennte oder gemeinsame Applikation der Verbindungen I und II oder der Mischungen aus den Verbindungen I und II durch Besprühen oder Bestäuben der Samen, der Pflanzen oder der Böden vor oder nach der Aussaat der Pflanzen oder vor oder nach dem Auflaufen der Pflanzen.

Die erfindungsgemäßen fungiziden synergistischen Mischungen bzw. die Verbindungen I und II können beispielsweise in Form von direkt versprühbaren Lösungen, Pulver und Suspensionen oder in Form von hochprozentigen wäßrigen, öligen oder sonstigen Suspensionen, Dispersionen, Emulsionen, Öldispersionen, Pasten, Stäubemitteln, Streumitteln oder Granulaten aufbereitet und durch Versprühen, Vernebeln, Verstäuben, Verstreuen oder Gießen angewendet werden. Die Anwendungsform ist abhängig vom Verwendungszweck; sie soll in jedem Fall eine möglichst feine und gleichmäßige Verteilung der erfindungsgemäßen Mischung gewährleisten.

Die Formulierungen werden in an sich bekannter Weise hergestellt, z.B. durch Zugabe von Lösungsmitteln und/oder Trägerstoffen. Den Formulierungen werden üblicherweise inerte Zusatzstoffe wie Emulgiermittel oder Dispergiermittel beigemischt.

Als oberflächenaktive Stoffe kommen die Alkali-, Erdalkali-, Ammoniumsalze von aromatischen Sulfonsäuren, z.B. Lignin-, Phenol-, Naphthalin- und Dibutylnaphthalinsulfonsäure, sowie von Fettsäuren, Alkyl- und Alkylarylsulfonaten, Alkyl-, Laurylether-und Fettalkoholsulfaten, sowie Salze sulfatierter Hexa-, Hepta-und Octadecanole oder Fettalkoholglycolethern, Kondensationsprodukte von sulfoniertem Naphthalin und seinen Derivaten mit Formaldehyd, Kondensationsprodukte des Naphthalins bzw. der Naphthalinsulfonsäuren mit Phenol und Formaldehyd, Polyoxyethylenoctylphenolether, ethoxyliertes Isooctyl-, Octyl- oder Nonylphenol, Alkylphenol- oder Tributylphenylpolyglycolether, Alkylarylpolyetheralkohole, Isotridecylalkohol, Fettalkoholethylenoxid- Kondensate, ethoxyliertes Rizinusöl, Polyoxyethylenalkylether oder Polyoxypropylen, Laurylalkoholpolyglycoletheracetat, Sorbitester, Lignin-Sulfitablaugen oder Methylcellulose in Betracht.

Pulver, Streu- und Stäubemittel können durch Mischen oder gemeinsames Vermahlen der Verbindungen I und II oder der Mischung aus den Verbindungen I und II mit einem festen Trägerstoff hergestellt werden.

Granulate (z.B. Umhüllungs-, Imprägnierungs- oder Homogengranulate) werden üblicherweise durch Bindung des Wirkstoffs oder der Wirkstoffe an einen festen Trägerstoff hergestellt.

Als Füllstoffe bzw. feste Trägerstoffe dienen beispielsweise Mineralerden wie Silicagel, Kieselsäuren, Kieselgele, Silikate, Talkum, Kaolin, Kalkstein, Kalk, Kreide, Bolus, Löß, Ton, Dolomit, Diatomeenerde, Kalzium- und Magnesiumsulfat, Magnesiumoxid, gemahlene Kunststoffe, sowie Düngemittel wie Ammoniumsulfat, Ammoniumphosphat, Ammoniumnitrat, Harnstoffe und pflanzliche Produkte wie Getreidemehl, Baumrinden-, Holz- und Nußschalenmehl,

Cellulosepulver oder andere feste Trägerstoffe.

Die Formulierungen enthalten im allgemeinen 0,1 bis 95 Gew.-%, vorzugsweise 0,5 bis 90 Gew.-% einer der Verbindungen I und II bzw. der Mischung aus den Verbindungen I und II. Die Wirkstoffe werden dabei in einer Reinheit von 90 % bis 100 %, vorzugsweise 95 % bis 100 % (nach NMR- oder HPLC-Spektrum) eingesetzt.

Die Verbindungen I und II bzw. die Mischungen oder die entsprechenden Formulierungen werden angewendet, indem man die Schadpilze, die von ihnen freizuhaltenden Pflanzen, Samen, Böden, Flächen, Materialien oder Räume mit einer fungizid wirksamen Menge der Mischung, bzw. der Verbindungen I und II bei getrennter Ausbringung, behandelt. Die Anwendung kann vor oder nach dem Befall durch die Schadpilze erfolgen.

Beispiele für solche Zubereitungen, welche die Wirkstoffe enthalten, sind:

I. eine Lösung aus 90 Gew.-Teilen der Wirkstoffe und 10 Gew.-Teilen N-Methylpyrrolidon, die zur Anwendung in Form kleinster Tropfen geeignet ist;

II. eine Mischung aus 20 Gew.-Teilen der Wirkstoffe, 80 Gew.-Teilen Xylol, 10 Gew.-Teilen des Anlagerungsproduktes von 8 bis 10 Mol Ethylenoxid an 1 Mol Ölsäure-N-monoethanolamid, 5 Gew.-Teilen Calciumsalz der Dodecylbenzolsulfonsäure, 5 Gew.-Teilen des Anlagerungsproduktes von 40 Mol Ethylenoxid an 1 Mol Ricinusöl; durch feines Verteilen der Lösung in Wasser erhält man eine Dispersion;

III. eine wäßrige Dispersion aus 20 Gew.-Teilen der Wirkstoffe, 40 Gew.-Teilen Cyclohexanon, 30 Gew.-Teilen Isobutanol, 20 Gew.-Teilen des Anlagerungsproduktes von 40 Mol Ethylenoxid an 1 Mol Ricinusöl;

IV. eine wäßrige Dispersion aus 20 Gew.-Teilen der Wirkstoffe, 25 Gew.-Teilen Cyclohexanol, 65 Gew.-Teilen einer Mineralölfraktion vom Siedepunkt 210 bis 280°C und 10 Gew.-Teilen des Anlagerungsproduktes von 40 Mol Ethylenoxid an 1 Mol Ricinusöl;

V. eine in einer Hammermühle vermahlene Mischung aus 80 Gew.-Teilen der Wirkstoffe, 3 Gew.-Teilen des Natriumsalzes der Diisobutylnaphthalin-1-sulfonsäure, 10 Gew.-Teilen des Natriumsalzes einer Ligninsulfonsäure aus einer Sulfitablauge und 7 Gew.-Teilen pulverförmigem Kieselsäuregel; durch feines Verteilen der Mischung in Wasser erhält man eine Spritzbrühe;

VI. eine innige Mischung aus 3 Gew.-Teilen der Wirkstoffe und 97 Gew.-Teilen feinteiligem Kaolin; dieses Stäubemittel enthält 3 Gew.-% Wirkstoff;

VII. eine innige Mischung aus 30 Gew.-Teilen der Wirkstoffe, 92 Gew.-Teilen pulverförmigem Kieselsäuregel und 8 Gew.-Teilen Paraffinöl, das auf die Oberfläche dieses Kieselsäuregels gesprüht wurde; diese Aufbereitung gibt dem Wirkstoff eine gute Haftfähigkeit;

VIII.eine stabile wäßrige Dispersion aus 40 Gew.-Teilen der Wirkstoffe, 10 Gew.-Teilen des Natriumsalzes eines Phenolsulfonsäure-Harnstoff-Formaldehyd-Kondensates, 2 Gew.-Teilen Kieselgel und 48 Gew.-Teilen Wasser, die weiter verdünnt werden kann;

IX. eine stabile ölige Dispersion aus 20 Gew.-Teilen der Wirkstoffe, 2 Gew.-Teilen des Calciumsalzes der Dodecylbenzolsulfonsäure, 8 Gew.-Teilen Fettalkohol-polyglykolether, 20 Gew.-Teilen des Natriumsalzes eines Phenolsulfonsäure-Harnstoff-Formaldehydkondensates und 88 Gew.-Teilen eines paraffinischen Mineralöls.

Die fungizide Wirkung der Verbindung und der Mischungen läßt sich durch folgende Versuche zeigen:

Die Wirkstoffe wurden getrennt oder gemeinsam als eine Stammlösung aufbereitet mit 0,25 Gew.-% Wirkstoff in Aceton oder DMSO. Dieser Lösung wurde 1 Gew.-% Emulgator Uniperol® EL (Netzmittel mit Emulgier- und Dispergierwirkung auf der Basis ethoxylierter Alkylphenole) zugesetzt und entsprechend der gewünschten Konzentration mit Wasser verdünnt.

Anwendungsbeispiel: Wirksamkeit gegen die Dürrfleckenkrankheit der Tomate verursacht durch *Alternaria solani*

Blätter von Topfpflanzen der Sorte "Große Fleischtomate St. Pierre" wurden mit einer wässriger Suspension in der unten angegebenen Wirkstoffkonzentration bis zur Tropfnässe besprüht. Am folgenden Tag wurden die Blätter mit einer wässrigen Sporenaufschwemmung von *Alternaria solani* in 2 % Biomalzlösung mit einer Dichte von 0,17 x $10^6$ Sporen/ml infiziert. Anschließend wurden die Pflanzen in einer wasserdampfgesättigten Kammer bei Temperaturen zwischen 20 und 22°C aufgestellt. Nach 5 Tagen hatte sich die Krautfäule auf den unbehandelten, jedoch infizierten Kontrollpflanzen so stark entwickelt, dass der Befall visuell in % ermittelt werden konnte.

Die Auswertung erfolgt durch Feststellung der befallenen Blattflächen in Prozent. Diese Prozent-Werte werden in Wirkungsgrade umgerechnet.

Der Wirkungsgrad (W) wird nach der Formel von Abbot wie folgt berechnet:

$$W = (1 - \alpha/\beta)\bullet 100$$

α entspricht dem Pilzbefall der behandelten Pflanzen in % und
β entspricht dem Pilzbefall der unbehandelten (Kontroll-) Pflanzen in %

Bei einem Wirkungsgrad von 0 entspricht der Befall der behandelten Pflanzen demjenigen der unbehandelten Kontrollpflanzen; bei einem Wirkungsgrad von 100 weisen die behandelten Pflanzen keinen Befall auf.
Die zu erwartenden Wirkungsgrade der Wirkstoffmischungen werden nach der Colby Formel [R.S. Colby, Weeds 15, 20-22 (1967)] ermittelt und mit den beobachteten Wirkungsgraden verglichen.
Colby Formel:

$$E = x + y - x \cdot y/100$$

E zu erwartender Wirkungsgrad, ausgedrückt in % der unbehandelten Kontrolle, beim Einsatz der Mischung aus den Wirkstoffen A und B in den Konzentrationen a und b
x der Wirkungsgrad, ausgedrückt in % der unbehandelten Kontrolle, beim Einsatz des Wirkstoffs A in der Konzentration a
y der Wirkungsgrad, ausgedrückt in % der unbehandelten Kontrolle, beim Einsatz des Wirkstoffs B in der Konzentration b

Tabelle A - Einzelwirkstoffe

| Beispiel | Wirkstoff | Wirkstoffkonzentration in der Spritzbrühe [ppm] | Wirkungsgrad in % der unbehandelten Kontrolle |
|---|---|---|---|
| 1 | Kontrolle (unbehandelt) | (82 % Befall) | 0 |
| 2 | I (Dithianon) | 63<br>31<br>16<br>8 | 63<br>27<br>0<br>0 |
| 3 | II-1 (Boscalid) | 63<br>31<br>16<br>8 | 88<br>82<br>76<br>63 |
| 4 | II-2 | 63<br>31<br>16<br>8 | 88<br>27<br>39<br>27 |

Tabelle B - erfindungsgemäße Kombinationen

| Beispiel | Wirkstoffmischung Konzentration Mischungsverhältnis | beobachteter Wirkungsgrad | berechneter Wirkungsgrad*) |
|---|---|---|---|
| 5 | I + II-1<br>63 + 8 ppm<br>8 : 1 | 100 | 87 |
| 6 | I + II-1<br>31 + 31ppm<br>1 : 1 | 100 | 87 |

Tabelle fortgesetzt

| Beispiel | Wirkstoffmischung Konzentration Mischungsverhältnis | beobachteter Wirkungsgrad | berechneter Wirkungsgrad*) |
|---|---|---|---|
| 7 | I + II-1<br>16 + 16 ppm<br>1 : 1 | 100 | 76 |
| 8 | I + II-1<br>8 + 8 ppm<br>1 : 1 | 100 | 63 |
| 9 | I + II-1<br>8 + 63 ppm<br>1 : 8 | 99 | 88 |
| 10 | I + II-2<br>63 + 8 ppm<br>8 : 1 | 100 | 73 |
| 11 | I + II-2<br>31 + 31 ppm<br>1 : 1 | 99 | 46 |
| 12 | I + II-2<br>16 + 16 ppm<br>1 : 1 | 99 | 39 |
| 13 | I + II-2<br>8 + 8 ppm<br>1 : 1 | 100 | 27 |
| 14 | I + II-2<br>8 + 63 ppm<br>1 : 8 | 100 | 88 |
| *) berechneter Wirkungsgrad nach der Cölby-Formel | | | |

Aus den Ergebnissen des Versuchs geht hervor, daß der beobachtete Wirkungsgrad in allen Mischungsverhältnissen höher ist, als nach der Colby-Formel vorausberechnet.

## Patentansprüche

**1.** Fungizide Mischung, enthaltend

A) die Verbindung der Formel I

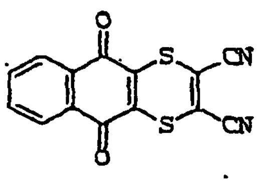

I

und
B) ein Biphenylamid der Formel II,

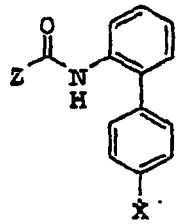

II

in der Z für einen Pyridyl- oder fünfgliederigen Heteroarylring steht, der neben Kohlenstoffatomen ein oder zwei Stickstoffatome oder ein Stickstoffatom und ein Sauerstoff- oder Schwefelatom enthält,
wobei Z einen bis drei gleiche oder verschiedene Substituenten aus der Gruppe Halogen, Methyl oder Trifluormethyl trägt, und X für Halogen steht,
in einer synergistisch wirksamen Menge.

2. Fungizide Mischungen nach Anspruch 1, enthaltend als Biphenylamid II eine Verbindung der Formel IIA.

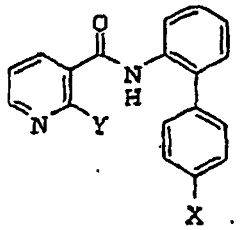

IIA

in der X Halogen und Y Halogen oder Trifluormethyl bedeutet.

3. Fungizide Mischungen nach Anspruch 1, enthaltend als Biphenylamid II die verbindung II-1 oder II-2.

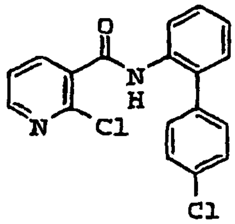

II-1

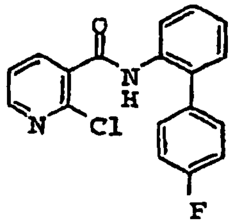

II-2

4. Fungizide Mischungen nach den Ansprüchen 1 bis 3, **dadurch gekennzeichnet, daß** das Gewichtsverhältnis der Verbindung I zu der Verbindung II 100:1 bis 1:10 ist.

5. Fungizides Mittel, enthaltend einen festen oder flüssigen Trägerstoff und eine Mischung gemäß Ansprüchen 1 oder 2.

6. Verfahren zur Bekämpfung von Schadpilzen, **dadurch gekennzeichnet, daß** man die Schadpilze, deren Lebensraum oder die von ihnen freizuhaltenden Pflanzen, Samen, Böden, Flachen, Materialien oder Räume mit synergistisch wirksamen Mengen der Verbindung der Formel I und einer Verbindung der Formel II gemäß Anspruch 1 behandelt.

7. Verfahren nach Anspruch 6, **dadurch gekennzeichnet, daß** man die Schadpilze, deren Lebensraum oder die von ihnen freizuhaltenden Pflanzen, Samen, Böden, Flächen, Materialien oder Räume mit 5 bis 2000 g/ha der Verbindung I gemäß Anspruch 1 behandelt.

8. Verfahren nach Anspruch 6, **dadurch gekennzeichnet, daß** man die Schadpilze, deren Lebensraum oder die von ihnen freizuhaltenden Pflanzen, Samen, Böden, Flächen, Materialien oder Räume mit 5 bis 500 g/ha mindestens

einer Verbindung II gemäß Anspruch 1 behandelt.

**9.** Verwendung der Verbindungen der Formeln I und II gemäß Anspruch 1 zur Herstellung einer Mischung gemäß Anspruch 1.

## Claims

**1.** A fungicidal mixture, comprising

A) the compound of the formula I

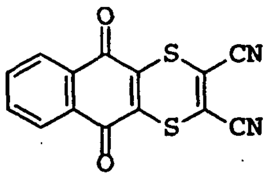

I

and
B) a biphenylamide of the formula II,

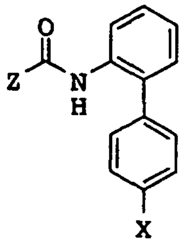

II

in which Z is a pyridyl ring or a five-membered heteroaryl ring which, in addition to carbon atoms, comprises one or two nitrogen atoms or one nitrogen atom and one oxygen or sulfur atom,
where Z carries one to three identical or different substituents from the group consisting of halogen, methyl, and trifluoromethyl, and X is halogen,

in a synergistically effective amount.

**2.** The fungicidal mixture according to claim 1, comprising, as biphenylamide II, a compound of the formula IIA

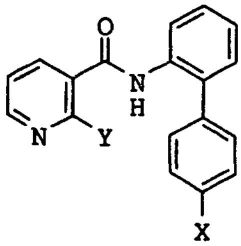

IIA

in which X is halogen and Y is halogen or trifluoromethyl.

**3.** The fungicidal mixture according to claim 1, comprising, as biphenylamide II, the compound II-1 or II-2.

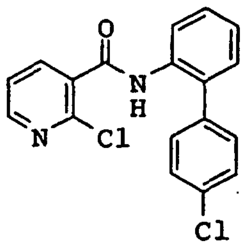 II-1

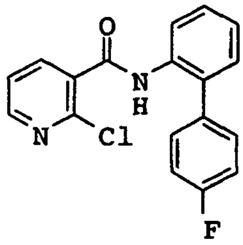 II-2

4. The fungicidal mixture according to any of claims 1 to 3, wherein the weight ratio of the compound I to the compound II is from 100:1 to 1:10.

5. The fungicidal composition, comprising a solid or liquid carrier and a mixture according to claim 1 or 2.

6. The method for controlling harmful fungi, which comprises treating the harmful fungi, their habitat, or the plants, seeds, soils, areas, materials or spaces to be kept free from them with synergistically effective amounts of the compound of the formula I and a compound of the formula II according to claim 1.

7. The method according to claim 6, which comprises treating the harmful fungi, their habitat, or the plants, seeds, soils, areas, materials or spaces to be kept free from them with from 5 to 2 000 g/ha of the compound I according to claim 1.

8. The method according to claim 6, which comprises treating the harmful fungi, their habitat, or the plants, seeds, soils, areas, materials or spaces to be kept free from them with from 5 to 500 g/ha of at least one compound II according to claim 1.

9. The use of the compounds of the formulae I and II according to claim 1 for preparing a mixture according to claim 1.

**Revendications**

1. Mélange fongicide contenant

A) le composé de formule I

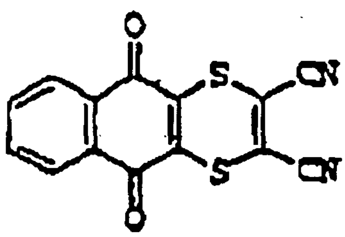 I

et
B) un biphénylamide de formule II

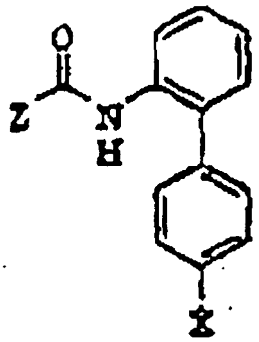

II

dans lequel Z désigne un cycle pyridyle ou hétéroaryle pentavalent qui contient, outre des atomes de carbone, un ou deux atomes d'azote ou un atome d'azote et un atome d'oxygène ou de soufre,
Z portant un à trois substituants identiques ou différents du groupe halogène, méthyle ou trifluorométhyle et X désigne un halogène,
dans une quantité synergiquement active.

2. Mélanges fongicides selon la revendication 1, contenant comme biphénylamide II un composé de formule IIA.

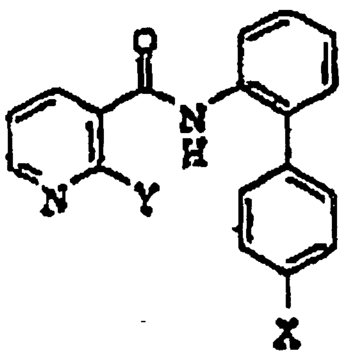

IIA

dans lequel X désigne un halogène et Y désigne un halogène ou un radical trifluorométhyle.

3. Mélanges fongicides selon la revendication 1, contenant comme biphénylamide II le composé II-1 ou II-2.

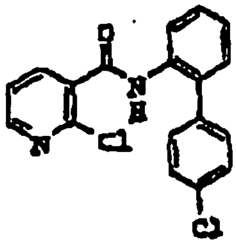

II-1

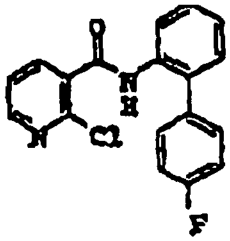

II-2

4. Mélanges fongicides selon les revendications 1 à 3, **caractérisés en ce que** le rapport pondéral du composé I au composé II est de 100:1 à 1:10.

5. Agent fongicide contenant un excipient solide ou liquide et un mélange selon les revendications 1 ou 2.

6. Procédé de lutte contre les champignons nocifs, **caractérisé en ce que** l'on traite les champignons nocifs, leur biotope ou les plantes, semences, sols, surfaces, matériaux ou espaces à préserver de ceux-ci avec des quantités

synergiquement actives du composé de formule I et d'un composé de formule II selon la revendication 1.

**7.** Procédé selon la revendication 6, **caractérisé en ce que** l'on traite les champignons nocifs, leur biotope ou les plantes, semences, sols, surfaces, matériaux ou espaces à préserver de ceux-ci avec 5 à 2000 g/ha du composé I selon la revendication 1.

**8.** Procédé selon la revendication 6, **caractérisé en ce que** l'on traite les champignons nocifs, leur biotope ou les plantes, semences, sols, surfaces, matériaux ou espaces à préserver de ceux-ci avec 5 à 500 g/ha d'au moins un composé II selon la revendication 1.

**9.** Mise en oeuvre des composés des formules I et II selon la revendication 1 pour la préparation d'un mélange selon la revendication 1.